# EUROPEAN PATENT SPECIFICATION

(11) **EP 3 718 869 B1**
(45) Date of publication and mention of the grant of the patent: **12.01.2022**
(21) Application number: 19170158.0
(22) Date of filing: 18.04.2019
(51) Int. Cl.: B62D 59/04

(54) **MANEUVERING DRIVE SYSTEM, VEHICLE WITH A MANEUVERING DRIVE SYSTEM AND KIT WITH A MANEUVERING DRIVE SYSTEM AND A LOADING DEVICE**
MANÖVRIERANTRIEBSSYSTEM, FAHRZEUG MIT EINEM MANÖVRIERANTRIEBSSYSTEM UND KIT MIT EINEM MANÖVRIERANTRIEBSSYSTEM UND EINER LADEVORRICHTUNG
SYSTÈME D'ENTRAÎNEMENT DE MANEUVRE, VÉHICULE DOTÉ D'UN SYSTÈME D'ENTRAÎNEMENT DE MANEUVRE ET KIT AVEC UN SYSTÈME D'ENTRAÎNEMENT DE MANEUVRE ET UN DISPOSITIF DE CHARGEMENT

(30) Priority: 02.04.2019 CN 201910261926
(43) Date of publication of application: 07.10.2020
(73) Proprietor: Carman Enterprise Co., Ltd., Yuhang District Hangzhou Zhejiang 311121 (CN)
(72) Inventor: Li, Xianwei, Hangzhou, 311121 (CN)
(74) Representative: Paul & Albrecht Patentanwälte PartG mbB

(56) References cited:
- CN-A- 102 412 372
- DE-U1-202016 104 574
- DE-U1-202016 105 321
- JP-A- H09 226 382

## Description

The invention relates to a maneuvering drive system for a vehicle, in particular a vehicle without its own drive, preferably for a trailer, comprising at least two drive units which are designed to be provided on the vehicle and each to drive a wheel of the vehicle, each drive unit comprising a rotatably mounted drive element which is designed and arranged such that it can be brought into abutment with a wheel of the vehicle to drive the vehicle, a motor which is designed to set the drive element in rotation, a battery, which is in particular designed to be rechargeable, for supplying the drive unit with electrical energy, a housing, which is in particular weather-resistant and/or watertight, which surrounds at least the motor of the drive unit and into which the battery of the drive unit can be inserted and removed therefrom, and a locking/unlocking mechanism by means of which the battery can be selectively attached to or detached from the housing, wherein the locking/unlocking mechanism includes at least one locking element disposed directly on the battery and engageable with the housing.

In addition, the invention relates to a vehicle, in particular a vehicle without its own drive, having a maneuvering drive system of the type described above. Furthermore, the invention relates to a kit having a maneuvering drive system or a vehicle of the type described above and a loading device.

Vehicles without their own drive may, for example, be trailers such as caravans, boat trailers, horse trailers or the like. In the case of such vehicles, it is considered problematic that they can only be moved with difficulty by hand if they are not connected to the towing vehicle, e.g. a passenger car. In the case of a caravan trailer, for example, which has been uncoupled from the car by which it was transported at a suitable point on a campsite, manual maneuvering to the final parking position is very difficult.

In order to facilitate maneuvering in the uncoupled state, maneuvering drive systems have been developed which can be mounted on a vehicle without its own drive. Such a maneuvering drive system usually comprises at least two drive units via which the wheels of the vehicle to be maneuvered can be set in rotation. The drive units are mounted on the outside of the vehicle, usually in an area immediately in front of or behind the wheels which are to be driven by the drive units. The drive units each comprise on their front side a rotatable drive element, for example a friction wheel, which is brought into frictional contact with a wheel of the vehicle, so that rotation of the drive element causes rotation of the wheel of the vehicle. Each drive element is assigned a motor which causes clockwise or counterclockwise rotation. If, in the case of a single-axle vehicle, such a drive unit is mounted in the area of each of the two wheels or, in the case of a two-axle or multi-axle vehicle, such a drive unit is mounted in the area of each wheel of at least one of the axles, the vehicle can be comfortably maneuvered by a user using the drive units.

A maneuvering drive system of this type is known from DE 20 2016 105 321 U1, for example. In addition to the drive element described above and the motor described above, the drive units of the maneuvering drive system of DE 20 2016 105 321 U1 each comprise a battery, in particular a rechargeable battery, for supplying the drive unit with electrical energy and a housing, in particular a weather-resistant and/or watertight housing, which accommodates at least the motor of the drive unit and the battery. The housing of each drive unit has an opening on its rear side opposite the drive element through which the battery can be inserted into the housing from the rear to the front and removed from the housing from the front to the rear. If the vehicle has a body, as is the case with caravans, for example, it must be ensured that the body leaves sufficient space for inserting and removing the battery.

Furthermore, the drive units of DE 20 2016 105 321 U1 each comprise a locking/unlocking mechanism by means of which the battery can be selectively attached to or detached from the housing. For this purpose, the locking/unlocking mechanism includes a locking element disposed directly on the battery and engageable with the housing. More precisely, a lid is moulded onto the battery which, when the battery is inserted, closes the opening in the rear of the housing. To fix the battery in the inserted state, a screw is provided as a locking element, which extends through the lid of the battery and is screwed to the housing. In order to attach or detach the battery from the housing, the screw on the maneuvering drive system of DE 20 2016 105 321 U1 must be operated using a suitable screwdriver. This is quite cumbersome and requires sufficient clearance for handling the screwdriver.

JP H 09 226 382 A discloses an electric bicycle with a battery box. The battery box can be plugged-in from above into a connection element disposed at the bicycle. The battery pack is at its top equipped with a handle that can be lifted up and gripped by hand by a user to remove the battery pack.

CN 102 412372 A discloses a battery unit for a hand-held power tool in the form of a battery-driven hammer drilling machine. The battery unit is disposed at the lower end area of the hammer drilling machine.

Based on this state of the art, it is an object of the present invention to provide a maneuvering drive system of the known kind, in which the batteries can be quickly and easily inserted into the associated housings and removed from them and which leaves a great deal of design freedom in the design of vehicle bodies.

In a maneuvering drive system of the type mentioned above, this object is achieved in that the housing of each drive unit has, on its underside an opening through which the respective battery can be inserted into the housing from below with its upper side ahead and can be removed from the latter with its underside ahead, and in that the at least one locking element can be operated by hand, in particular with a single hand, without the aid of a tool.

In other words, the basic idea of this invention is to provide a maneuvering drive system in which the batteries can be inserted from below into the associated housing and removed from it via an opening on the underside of the housing. In this way, a user only needs to reach under the respective drive unit or under the body of a trailer to gain access to the battery. Compared to the known maneuvering drive system, the battery of the maneuvering drive system according to the invention can thus be inserted relatively easily from below into the corresponding housing and removed from it. Furthermore, the arrangement of the opening on the underside of the housing offers the advantage that the insertion and removal of the batteries does not have to be taken into account when designing vehicle bodies, i.e. the design freedom is not impaired. In addition, the opening at the underside of the housing facilitates drainage in the event of water entering the housing. Since in the maneuvering drive system according to the invention the at least one locking element can be operated by hand without the aid of a tool, the battery can be easily and uncomplicatedly inserted into the housing and removed from it. As soon as the locking element is disengaged from the housing, i.e. the battery is detached from the housing, the gravity of the earth supports the battery moving out of the housing from top to bottom, thus reducing the amount of force required from the user. This also takes into account the fact that the underside of the case is difficult to see when handling the battery.

According to an embodiment of the invention, at least two locking elements are provided which are arranged on opposite sides of the battery, and can be moved, in particular in a guided manner, inwards towards one another into a release position and outwards away from one another into a locking position. The locking elements may each project laterally from the battery in the locking position.

Preferably, at least one spring element is provided which biases the locking elements in the direction of the locking position, making handling considerably easier.

The locking elements are conveniently formed on two plates which are arranged adjacent to one another and can be moved inwards towards one another and outwards away from one another.

It is advantageous to have at least two locking elements on each panel, which are preferably arranged at maximum distance from each other. In this way, the battery is attached to the housing in a relatively stable manner.

According to another embodiment locking counter elements are provided on the housing, which are designed and positioned in such a way that the locking elements engage with them when they are transferred from their release position to their locking position. The locking counter elements are preferably designed inside the housing, especially on the inside of the housing. The locking counter elements may be located near the opening of the housing. The fact that the locking/unlocking mechanism is partly provided directly on the battery and partly on the associated housing makes it very space-saving.

The locking counter elements may define recesses, in particular groove-shaped recesses. The locking elements may taper towards their free end, in particular taper in a wedge-shaped manner, so that they can be more easily engaged with the assigned locking counter elements.

It is also possible that the locking elements are each provided with a recess at their free end, in particular a groove-shaped recess. In this case, the locking counter elements are designed as projections on the housing.

Advantageously, the locking/unlocking mechanism includes handles for actuating the at least one locking element which in particular define recessed grips and/or are in particular arranged on the underside of the battery. These are particularly located on the underside of the battery and preferably at the edge of the battery. The handles are preferably opposite each other and can be moved by hand between an approximated position, in which the locking elements are in their release position, and a distant position, in which the locking elements are in their locking position, towards and away from each other. In this way, the at least one locking element can be easily operated with a single hand.

Another embodiment of the invention is characterized in that the batteries and the housings are provided with correspondingly designed guide elements which are designed in such a way that they specify a unique insertion direction when a battery is inserted into a housing. This prevents the battery from being inserted the wrong way round into the housing. The guide elements extend in particular in a straight line between the upper side and underside of the battery. For example, the guide elements are designed at the one hand as a projection and at the other hand as a groove.

Each battery may include a discharge interface which is located in particular on the upperside of the battery. The discharge interface preferably includes a plug which is in particular formed on the battery and can be plugged into at least one corresponding socket provided on the housing. The socket can be provided inside the housing of the associated drive unit.

It is useful for each battery to include a charging interface, which in particular comprises two battery charging poles.

It is advantageous if the opening of each housing can be completely closed with a cover. The cover prevents moisture and dirt from getting inside the housing. The cover may be pirotably held the underside of the housing and may be locked in a closed position by means of a cover closure mechanism. The cover closure mechanism may comprise a closure element, in particular a hook element, formed on the housing, a corresponding closure counter element, in particular a projection, formed on the cover, and a slide switch operatively connected to the closure element. In this case, the cover closure mechanism can be transferred by shifting the slide switch from a closure position, in which the closure element is in engagement with the closure counter element and the cover is locked in its closed position, into a release position, in which the closure element is out of engagement with the closure counter element and the cover can be pivoted into its open position. Such a cover closure mechanism can be easily operated with one hand.

In addition, the above-mentioned object is, in accordance with the invention, also achieved by a vehicle, in particular a vehicle without its own drive, comprising a maneuvering drive system according to the invention. The vehicle may, for example, be a trailer, in particular a caravan, boat or horse trailer.

Furthermore, another subject of the invention is a kit comprising a maneuvering drive system and/or a vehicle according to the invention and a charging device for charging the batteries of the maneuvering drive system. Here the charging device may be designed to be operated with an input voltage of 220V or 12V. Advantageously, the charging device comprises at least two charging cradles for the at least two batteries of the at least two drive units. The batteries can each be inserted into the charging cradles with their charging interface pointing downwards. The charging cradles are in particular provided with battery level indicators.

Further features and advantages of the present invention will become clear by the following description of an embodiment of a maneuvering drive system according to the invention with reference to the enclosed drawing. In it is:
- Figure 1: a perspective view of a maneuvering drive system attached to a trailer according to an embodiment of the present invention;
- Figure 2: a perspective side view of the drive unit from figure 1;
- Figure 3: a bottom view of the drive unit from figure 2 with an open cover;
- Figure 4: a perspective lateral rear view of the drive unit from figures 2 and 3 with an open case;
- Figure 5: a perspective view of the battery of the drive unit from figures 2 to 4 with the underside of the battery facing forward;
- Figure 6: a perspective view of the battery of the drive unit from Figures 2 to 4 with the upper side of the battery facing forward;
- Figure 7: a cross-sectional view of the battery from figures 5 and 6;
- Figure 8: a rear view of the drive unit from Figures 2 to 4 with partially open housing with closed cover and the locking elements of the battery in the locking position;
- Figure 9: a rear view of the drive unit from Figures 2 to 4 with partially open housing with open cover and the locking elements of the battery in the release position;
- Figure 10: an enlarged view of the cover closure mechanism of the drive unit from Figure 9 in its release position;
- Figure 11a-d: perspective views of the drive unit from Figures 2 to 4 and 8 to 10 at different times while removing the battery from the housing of the drive unit;
- Figure 12a-d: perspective views of the drive unit from figures 2 to 4 and 8 to 10 at different times during the insertion of the battery into the housing of the drive unit;
- Figure 13: a perspective view of a charging device for charging the battery from figures 5 to 7;
- Figure 14: a schematic representation of a part of a trailer having a drive unit, wherein the advantage of inserting the battery from bottom to top over inserting the battery from rear to front into the housing of the drive unit is illustrated.

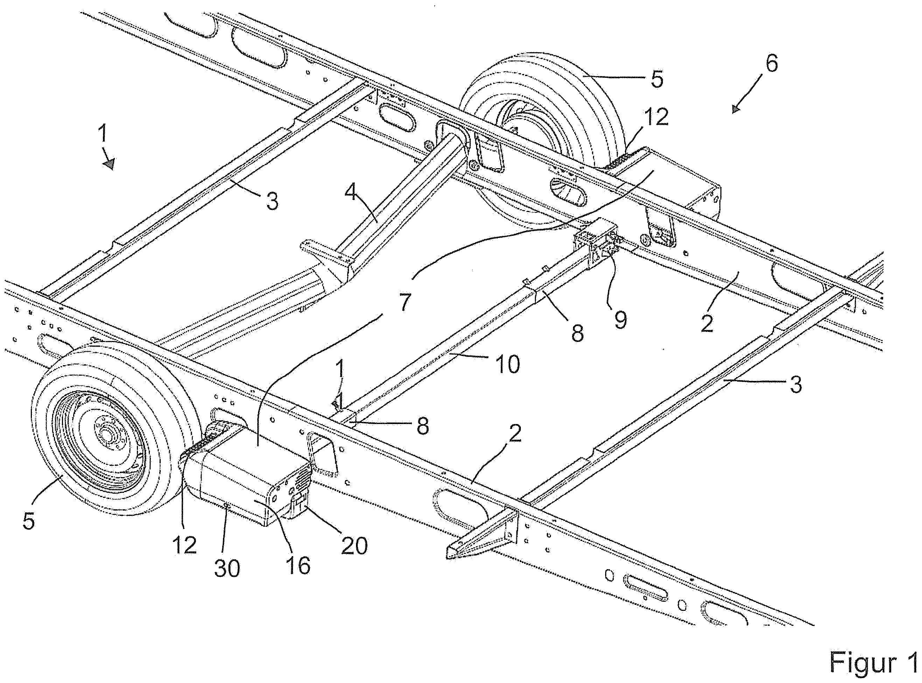

Figure 1 shows a central part of a chassis 1 of a vehicle not further depicted, which is a trailer, more precisely a boat trailer. Chassis 1 comprises two parallel side beams 2 which are connected to each other by two cross beams 3.

In addition, the chassis 1 comprises an axle 4 between the two cross beams 3 which is fixed to the two side beams 2. At the opposite ends of the axle 4 two wheels 5 are mounted.

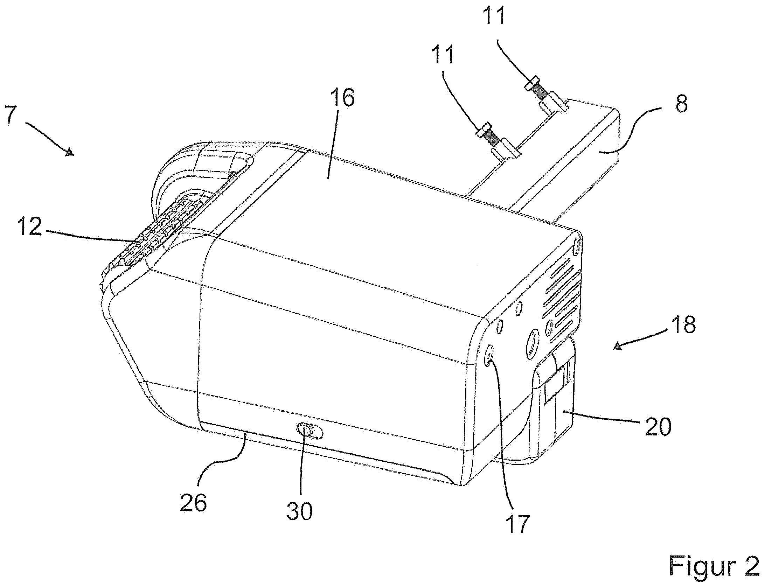

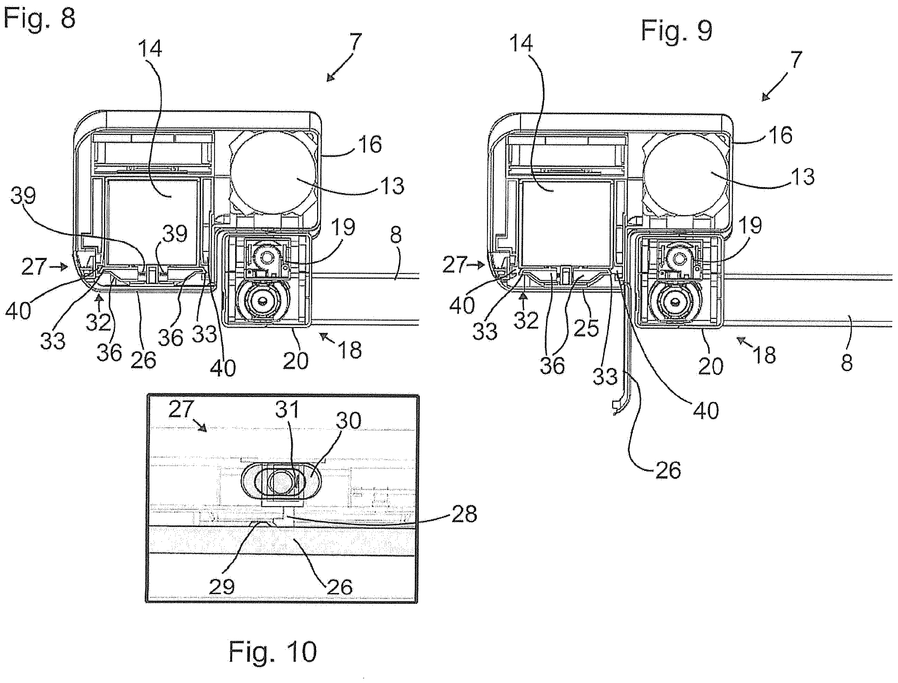

The boat trailer does not have its own drive and, if it is not connected to a passenger car serving as a towing vehicle, can hardly be moved by hand, in particular can hardly be maneuvered. Therefore, the boat trailer is equipped with an inventive maneuvering drive system 6 which comprises two drive units 7 which are shown in more detail in Figures 2 to 12. The drive units 7 are each attached to a side beam 2 of the chassis 1 in an area immediately behind the respective wheel 5. More precisely, a square tube 8 is attached on one side to a drive unit 7 and on the other side to the respective side beam 2 by means of clamping elements 9. The two square tubes 8 are connected via a connecting square tube 10 of smaller outer diameter which is inserted into the two square tubes 8 and fixed to these by means of two screws 11 each. Via the two drive units 7, the wheels 5 of the boat trailer can be driven and the boat trailer can be moved, especially maneuvered, without a towing vehicle.

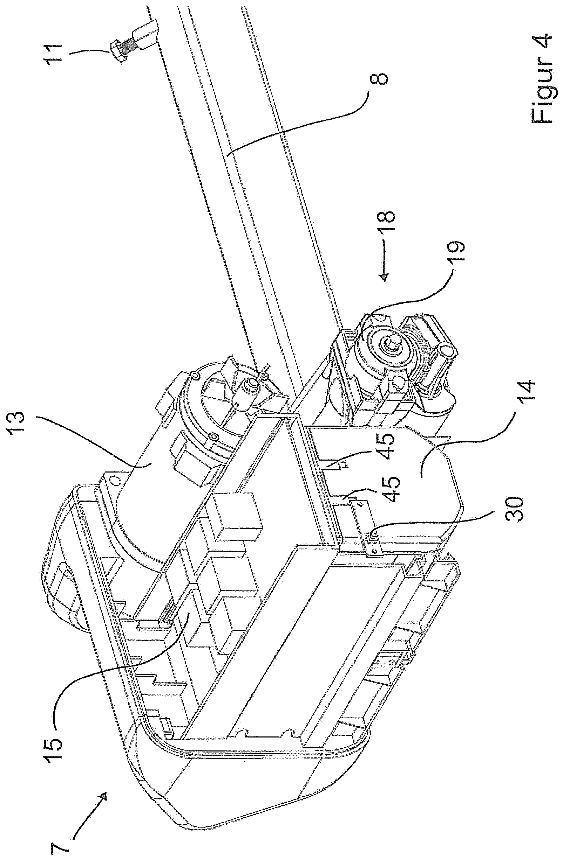

For this purpose, each of the two drive units 7 comprises a rotatably mounted drive element, specifically a friction roller 12, which is designed and arranged in such a way that it can be brought into abutment with the corresponding wheel 5 of the boat trailer in order to drive the latter. Furthermore, the drive units 7 each comprise a motor 13 via which the respective friction roller 12 can be rotated clockwise or counterclockwise, and a rechargeable battery 14 for supplying the drive unit 7 with electrical energy. In addition, the drive units 7 are equipped with a control board 15 for controlling the drive unit 7. A communication module, not shown, is integrated in the control board 15. The communication module is designed to receive commands for controlling the drive unit 7 which are generated by an operating device, specifically a remote control, not shown, based on maneuvering commands entered into the remote control by the user and sent wirelessly to the communication modules of the two drive units 7. As can be seen in figures 4, 8 and 9, the motor 13, the battery 14 and the control board 15 are arranged inside a weatherproof and waterproof housing 16 of the drive unit 7. As can be seen in particular in figure 2, the drive units 7 are each provided with a power switch 17 on the rear side of the housing 16 for switching the drive unit 6 on and off.

Furthermore, the drive units 7 are each assigned an infeed device 18, which comprises an infeed motor 19 and which is surrounded by an infeed housing 20. The drive units 7 are each pivotably held on the square tube 8 by the associated infeed device 18, so as to be pivotable back and forth between an operating position in which the friction roller 12 is in frictional contact with the wheel 5, and a rest position in which the friction roller 12 is arranged at a predetermined distance from the wheel 5.

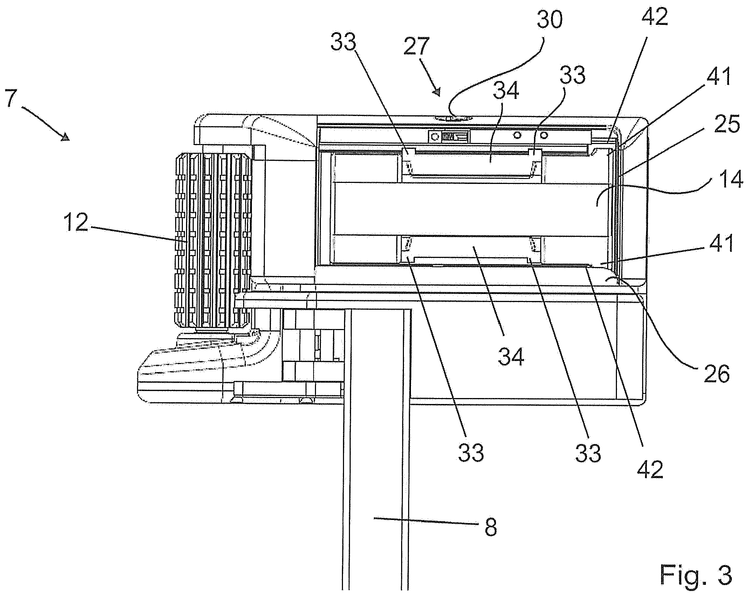

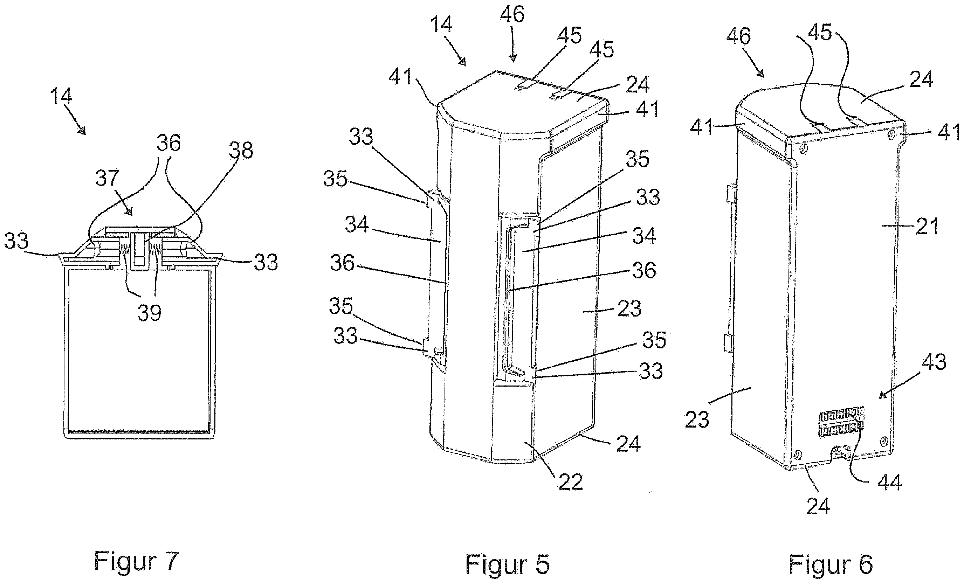

As can be seen in figures 5 and 6, the batteries 14 of the drive units 7 are rectangular in shape and comprise an upper side 21, an underside 22, two opposite long sides 23 and two opposite front sides 24. For example, in Figure 3 it can be seen that the housing 16 has an opening 25 on its underside through which the battery 14 can be inserted into the associated housing 16 with its upper side 21 ahead and can be removed from the latter with its underside 22 ahead.

The opening 25 can be completely closed with a cover 26 pivotably held on the underside of the housing 16. The cover 26 can be locked in a closed position by means of a cover closure mechanism 27. The cover closure mechanism 27 comprises a closure element 28, in the present case, a hook member, formed on the housing 16, a corresponding closure counter element 29, in the present case a projection, formed on the cover 26, and a slide switch 30 operatively connected to the closure element 28. The cover closure mechanism 27 can be transferred by shifting the slide switch 30 from a closure position in which the closure element 28 is in engagement with the closure counter element 29 and the cover 26 is locked in its closed position, into a release position, in which the closure element 28 is out of engagement with the closure counter element 29 and the cover 26 can be pivoted into its open position. The cover closure mechanism 27 is biased into its closed position by means of a spring 31.

As can be seen in particular in Figures 5, 8 and 9, each drive unit 7 also includes a locking/unlocking mechanism 32 by means of which the battery 14 can be selectively attached to or detached from the housing 16. The locking/unlocking mechanism 32 has four locking elements 33 located directly on the battery 14. The locking elements 33 can be operated with a single hand without the use of a tool and can be engaged with the housing 16. The locking elements 33 are formed on two plates 34 arranged adjacent to one another and can be moved inwards towards one another and outwards away from one another. More precisely, two locking elements 33 are provided on each plate 34 arranged at a maximum distance from each other and each taper in a wedge-shaped manner towards their free end. In this way, the two pairs of locking elements 33 arranged on the opposite long sides 23 of the battery 14 can be moved inwards towards one another in a release position and outwards away from one another in a locking position via the plates 34. The locking elements 33 protrude sideways from the battery 14 in the locking position.

In addition, the locking/unlocking mechanism 32 comprises handles 36 for actuating the locking elements 33 which are arranged on the underside 22 of the battery 14. The handles 36 are each connected to one of the two plates 34 and each define recessed grips. The handles 36 are opposite each other and moveably held on a support structure 37 of the locking/unlocking mechanism 32 such that they are movable towards and away from each other by hand between an approximated position in which the locking elements 33 are in their release position and a distant position in which the locking elements 33 are in their locking position. The support structure 37 comprises a central support element 38 disposed between the two handles 36. A spring element 39, in the present case a helical compression spring, is supported between the central support element 38 and each of the two handles 36 to bias the locking elements 33 towards the locking position. The helical compression springs each encompass a support rod provided on the central support element 38 and protruding from it in the direction of the respective handle 36 so that the helical compression springs are internally supported in this way. The support rod is not shown in Figure 7 for reasons of clarity.

In addition, the locking/unlocking mechanism 32 includes locking counter elements 40 formed on the housing 16. These are designed and positioned in such a way that the locking elements 33 engage with them when they are transferred from their release position into their locking position. Specifically, the locking counter elements 40 define two opposed groove-shaped recesses in the vicinity of the opening 25 of the housing 16 which extend between the rear and front of the housing.

As can be seen from figures 3, 5 and 6, each battery 14 and its associated housing 16 are provided with correspondingly designed guide elements 41, 42, which are designed in such a way that when the battery 14 is inserted into the housing 16 they specify a unique insertion direction. Specifically, two opposite projections 41 are formed at the front edges of the long sides 23 of the battery 14 which extend in a straight line between the upper side 21 and the underside 22 of the battery 14. The housing 16 is provided with grooves 42 corresponding to the protrusions 41. Furthermore, on the upper side 21 of each battery 14 there is a discharge interface 43 including a plug 44 which is formed on the battery 14 and can be plugged into a corresponding socket provided on the drive unit 7 and not shown in the figures for the sake of clarity. In addition, a charging interface 46 comprising two battery charging poles 45 is provided at a front side 24 of the battery 14 adjacent to the two projections 41.

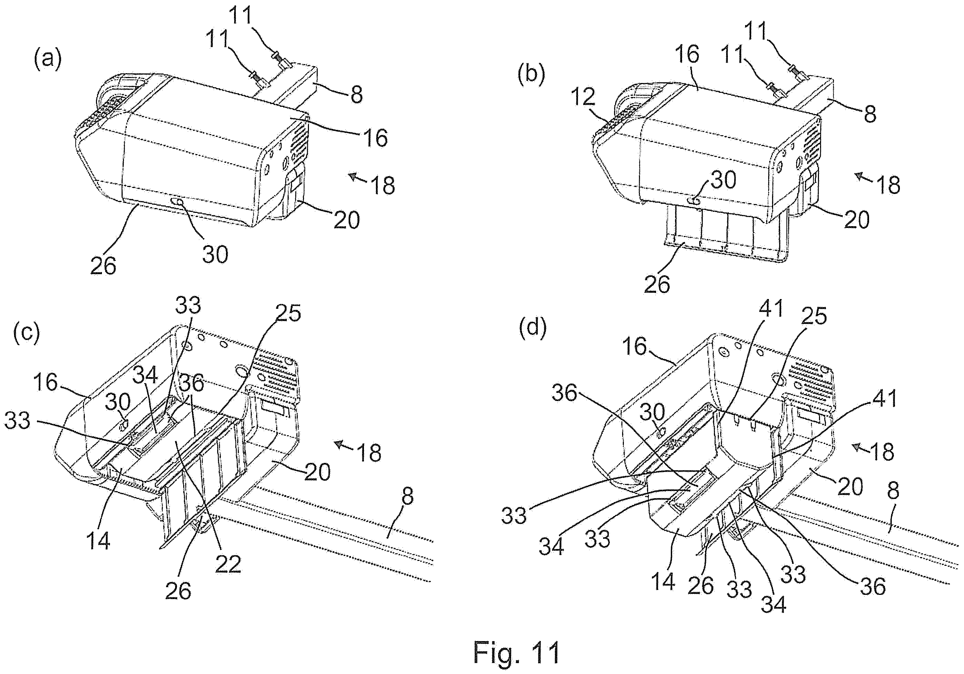

Using the perspective views of drive unit 7 shown in figure 11a-d at different times during battery 14 removal from the housing 16 of the drive unit 7, the following step-by-step procedure for removing the battery 14 is explained. First the cover 26 locked in its closed position is unlocked by moving the cover closure mechanism 27 manually from its closure position into its release position by moving the slide switch 30, see Figure 11a. The cover 26 is then pivoted into its open position, see Figure 11b. In the next step, the battery 14 is released from the housing 16 by means of the locking/unlocking mechanism 32. For this purpose, a user reaches with the fingers of a single hand into the recessed grips of the two opposite handles 36 of the locking/unlocking mechanism 32 and moves the handles 36 by exerting pressure against the biasing force of the spring elements 39 from their distant position into their approximated position in which the locking elements 33 are in their release position, see Figure 11c. In a final step, the user removes the battery 14 from the housing 16 through the opening 25 on the underside of the housing 16 with the underside 22 of the battery 14 ahead, while continuing to hold the handles 36 compressed, see Figure 11d.

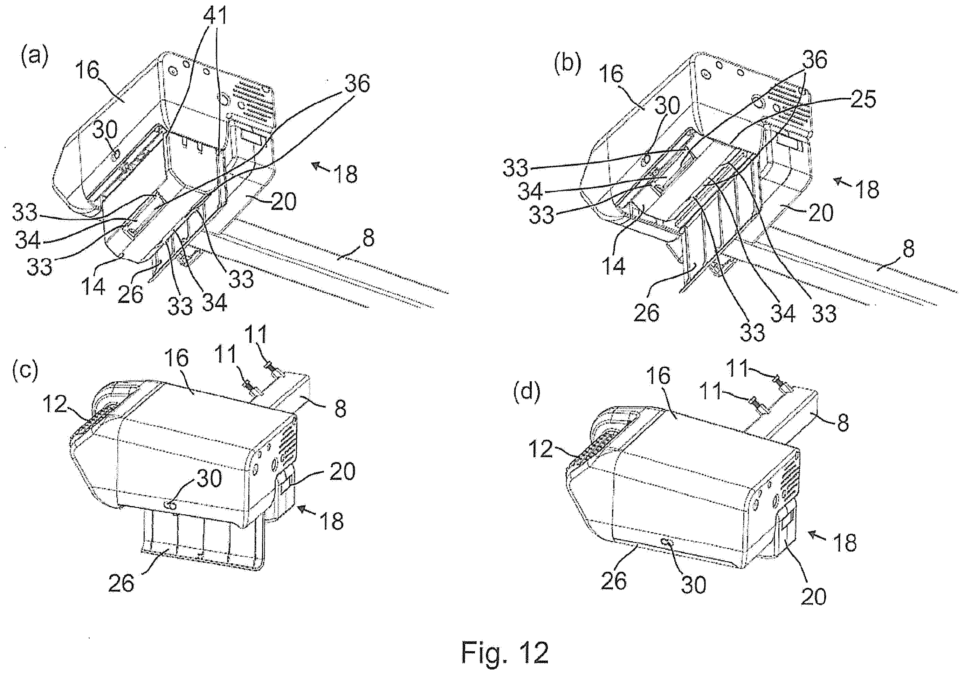

Using the perspective views of the drive unit 7 shown in figure 12a-d at different times during insertion of the battery 14 into the housing 16 of the drive unit 7, the procedure for inserting the battery 14 is explained step by step below. The user first reaches with the fingers of a single hand into the recessed grips of the two opposite handles 36 of the part of the locking/unlocking mechanism 32 located directly on the battery 14 and moves the handles 36 from their distant position to their approximated position by applying pressure against the biasing force of the spring elements 39. The user then inserts the battery 14, held in this way with a single hand, with its upper side 21 ahead into the housing 16, see Figure 12a. The guide elements 41, 42, namely the protrusions 41 provided on the battery 14 and the grooves 42 provided on the housing 16, provide a unique insertion direction. Once the battery 14 has been fully inserted into the housing 16, the battery 14 is released, i.e. the fingers are removed from the recessed grips of the handles 36, whereby the handles 36 are moved away from each other from their approximated position to their distant position by the biasing force of the spring elements 39. In the distant position, the locking elements 33 are in their locking position, i.e. in engagement with the locking counter elements 40 formed on the housing 16, whereby the battery is attached to the housing 16, see Figure 12b. Finally, the cover 26 is pivoted from its open position to its closed position, see Figure 12c, and locked in this position by transferring the cover closure mechanism 27 to its closure position, see Figure 12d. This allows the user to insert and remove the battery 14 from the housing without the use of a tool.

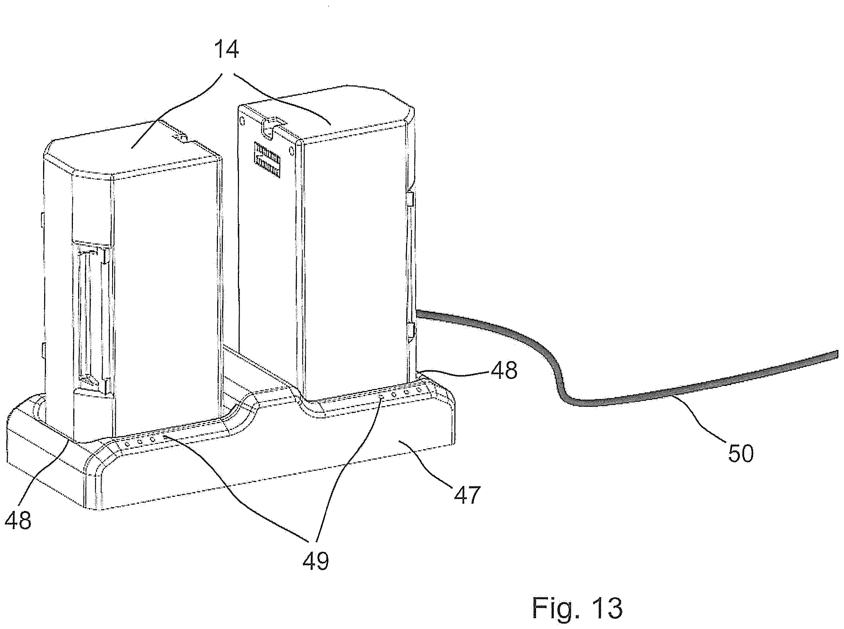

Figure 13 shows a charging device 47 with two charging cradler 48 for charging the two batteries 14 of the drive units 7, wherein the charging cradles 48 are each provided with a battery level indicator 49. The charging device 47 has a power cord 50 for connection to an external power source. In the present case, the charging device 47 can be operated with an input voltage of 220V or 12V. To charge the batteries 14, they are first removed from the respective housing 16 and then inserted with their charging interface 46 facing downwards into one of the two charging cradles 48 of the charging device 47. Figure 13 shows this inserted state of the batteries 14.

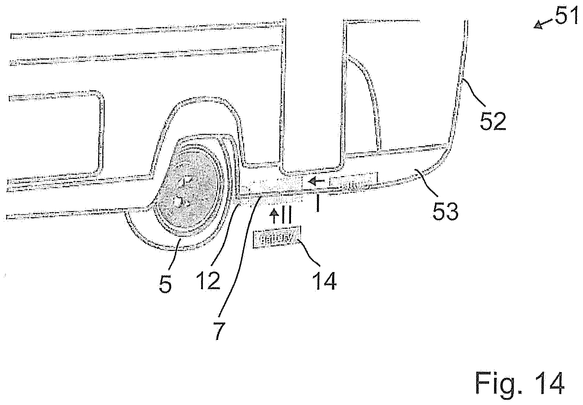

Figure 14 shows a schematic representation of a part of a trailer, specifically a caravan trailer 51 with a caravan body 52. The caravan trailer 51 is equipped with an inventive maneuvering drive system 6 which comprises two drive units 7. These are each mounted in an area immediately rear of a wheel 5 of the caravan trailer 51. Figure 14 shows only the left wheel 5 and the drive unit 7 assigned to it. As can be seen, a side wall 53 of the caravan body 52 covers at least a part of the housing 16 of the drive unit 7. Since in the maneuvering drive system according to the invention the housing 16 of the drive unit 7 is provided with an opening 25 on its underside, a user can comfortably insert the battery 14 into the housing 16 from bottom to top in the direction of arrow II. The user only has to reach under the drive unit 7 with one hand. On the other hand, in the case of an opening at the rear of the housing 16, as is the case in the maneuvering drive system of DE 20 2016 105 321 U1, it would be difficult to insert the battery 14. This is, since in this case the user must insert the battery 14 from the rear to the front in the direction of arrow I into the housing 16, wherein the opening of the housing 16 is partially covered by the side wall 53 of the caravan body 52. In this case, the opening is therefore difficult to access and difficult or impossible to see.

### Reference sign list

- **1**: chassis
- **2**: side beam
- **3**: cross beam
- **4**: axle
- **5**: wheel
- **6**: maneuvering drive system
- **7**: drive unit
- **8**: square tube
- **9**: clamping element
- **10**: connection square tube
- **11**: screw
- **12**: friction roller
- **13**: motor
- **14**: battery
- **15**: control board
- **16**: housing
- **17**: power switch
- **18**: infeed device
- **19**: infeed motor
- **20**: infeed housing
- **21**: upper side
- **22**: underside
- **23**: long side
- **24**: front side
- **25**: opening
- **26**: cover
- **27**: cover closure mechanism
- **28**: closure element
- **29**: closure counter element
- **30**: slide switch
- **31**: spring
- **32**: locking/unlocking mechanism
- **33**: locking element
- **34**: plate
- **35**: free end
- **36**: handle
- **37**: support structure
- **38**: central support element
- **39**: spring element
- **40**: locking counter element
- **41**: protrusion
- **42**: groove
- **43**: discharge interface
- **44**: plug
- **45**: battery charging pole
- **46**: charging interface
- **47**: charging device
- **48**: charging cradle
- **49**: battery level indicator
- **50**: power cord
- **51**: caravan trailer
- **52**: caravan body
- **53**: side wall

## Claims

1. Maneuvering drive system (6) for a vehicle, in particular a vehicle without its own drive, preferably for a trailer (51), comprising at least two drive units (7) which are designed to be provided on the vehicle and each to drive a wheel (5) of the vehicle, each drive unit (7) comprising a rotatably mounted drive element (12) which is designed and arranged such that it can be brought into abutment with a wheel (5) of the vehicle to drive the vehicle, a motor (13) which is designed to set the drive element (12) in rotation, a battery (14), which is in particular designed to be rechargeable, for supplying the drive unit (7) with electrical energy, a housing (16), which is in particular weather-resistant and/or watertight, which surrounds at least the motor (13) of the drive unit (7) and into which the battery (14) of the drive unit (7) can be inserted and removed therefrom, and a locking/unlocking mechanism (32) by means of which the battery (14) can be selectively attached to or detached from the housing (16), wherein the locking/unlocking mechanism (32) includes at least one locking element (33) disposed directly on the battery (14) and engageable with the housing (16), **characterised in that** the housing (16) of each drive unit (7) has, on its underside, an opening (25) through which the respective battery (14) can be inserted into the housing (16) from below with its upper side (21) ahead and can be removed from the latter with its underside (22) ahead, and **in that** the at least one locking element (33) can be operated by hand, in particular with a single hand, without the aid of a tool.

2. Maneuvering drive system (6) according to claim 1, **characterized in that** at least two locking elements (33) are provided which are arranged on opposite sides of the battery (14) and can be moved, in particular in a guided manner, inwards towards one another into a release position and outwards away from one another into a locking position in which they each project laterally from the battery (14), wherein preferably at least one spring element (39) is provided which biases the locking elements (33) in the direction of the locking position.

3. Maneuvering drive system (6) according to claim 2, **characterized in that** the locking elements (33) are formed on two plates (34) which are arranged adjacent to one another and can be moved inwards towards one another and outwards away from one another.

4. Maneuvering drive system (6) according to claim 2 or 3, **characterized in that** locking counter elements (40) are formed on the housing (16) and are designed and positioned in such a way that the locking elements (33) engage with them when they are transferred from their release position into their locking position.

5. Maneuvering drive system (6) according to Claim 4, **characterized in that** the locking elements (33) taper towards their free end (35), in particular taper in a wedge-shaped manner, and **in that** the locking counter elements (40) define recesses, in particular groove-shaped recesses.

6. Maneuvering drive system (6) according to any of the preceding claims, **characterized in that** the locking/unlocking mechanism (32) includes handles (36) for actuating the at least one locking element (33) which in particular define recessed grips and/or are in particular arranged on the underside (22) of the battery (14).

7. Maneuvering drive system (6) according to any one of the preceding claims, **characterized in that** the batteries (14) and the housings (16) are provided with correspondingly designed guide elements which are designed in such a way that they specify a unique insertion direction when a battery (14) is inserted into a housing (16).

8. Maneuvering drive system (6) according to claim 7, **characterized in that** the guide elements are designed on the one hand as a projection (41) and on the other hand as a groove (42).

9. Maneuvering drive system (6) according to any of the preceding claims, **characterized in that** each battery (14) includes a discharge interface (43) which is located in particular on the upper side (21) of the battery (14), the discharge interface (43) preferably including a plug (44) which is in particular formed on the battery (14) and can be plugged into at least one corresponding socket provided on the housing (16), and/or each battery (14) includes a charging interface (46) which in particular comprises two battery charging poles (45).

10. Maneuvering drive system (6) according to any of the preceding claims, **characterized in that** the opening (25) of each housing (16) can in particular be completely closed with a cover (26).

11. Maneuvering drive system (6) according to claim 10, **characterized in that** the cover (26) is pivotably held on the underside of the housing (16) and can be locked in a closed position by means of a cover closure mechanism (27).

12. Maneuvering drive system (6) according to claim 11, **characterized in that** the cover closure mechanism (27) comprises a closure element (28), in particular a hook element, formed on the housing (16), a corresponding closure counter element (29), in particular a projection, formed on the cover (26) and a slide switch (30) operatively connected to the closure element (28), wherein the cover closure mechanism (27) can be transferred by shifting the slide switch (30) from a closure position, in which the closure element (28) is in engagement with the closure counter element (29) and the cover (26) is locked in its closed position, into a release position, in which the closure element (28) is out of engagement with the closure counter element (29) and the cover (26) can be pivoted into its open position.

13. Vehicle, in particular vehicle without its own drive, comprising a maneuvering drive system (6) according to any of the preceding claims, wherein the vehicle is preferably a trailer (51), in particular a caravan, boat or horse trailer.

14. Kit comprising a maneuvering drive system (6) according to any of claims 1 to 12 and/or a vehicle according to claim 13 and a charging device (47) for charging the batteries (14) of the maneuvering drive system (6), wherein the charging device (47) is particularly designed to be operated with an input voltage of 220V or 12V.

15. Kit according to claim 14, **characterized in that** the charging device (47) comprises at least two charging cradles (48) for the at least two batteries (14) of the at least two drive units (7) and the batteries (14) can each be inserted into the charging cradles (48) with their charging interface (46) pointing downwards, wherein the charging cradles (48) are in particular provided with battery level indicators (49).

## Patentansprüche

1. Rangierantriebssystem (6) für ein Fahrzeug, insbesondere ein Fahrzeug ohne eigenen Antrieb, bevorzugt für einen Anhänger (51), umfassend wenigstens zwei Antriebseinheiten (7), die ausgebildet sind, um an dem Fahrzeug vorgesehen zu werden und jeweils ein Rad (5) des Fahrzeuges anzutreiben, wobei jede Antriebseinheit (7) ein drehbar gelagertes Antriebselement (12), welches derart ausgebildet und angeordnet ist, dass es in Anlage an ein Rad (5) des Fahrzeuges bringbar ist, um das Fahrzeug anzutreiben, einen Motor (13), welcher ausgebildet ist, um das Antriebselement (12) in Rotation zu versetzen, eine insbesondere wiederaufladbar ausgestaltete Batterie (14) zur Versorgung der Antriebseinheit (7) mit elektrischer Energie, ein insbesondere witterungsbeständiges und/oder wasserdichtes Gehäuse (16), welches zumindest den Motor (13) der Antriebseinheit (7) umgibt und in welches die Batterie (14) der Antriebseinheit (7) einsetzbar und daraus entfernbar ist, und einen Verriegelungs-/Entriegelungs-Mechanismus (32) umfasst, mittels dem die Batterie (14) wahlweise an dem Gehäuse (16) befestigt oder von diesem gelöst werden kann, wobei der Verriegelungs-/Entriegelungs-Mechanismus (32) wenigstens ein direkt an der Batterie (14) angeordnetes Verriegelungselement (33) aufweist, das mit dem Gehäuse (16) in Eingriff gebracht werden kann, **dadurch gekennzeichnet, dass** das Gehäuse (16) jeder Antriebseinheit (7) an seiner Unterseite eine Öffnung (25) aufweist, durch welche die jeweilige Batterie (14) mit ihrer Oberseite (21) voraus von unten in das Gehäuse (16) einsetzbar und mit ihrer Unterseite (22) voraus aus diesem entfernbar ist, und dass das wenigstens eine Verriegelungselement (33) mit der Hand, insbesondere mit einer einzelnen Hand, ohne Zuhilfenahme eines Werkzeugs betätigbar ist.

2. Rangierantriebssystem (6) nach Anspruch 1, **dadurch gekennzeichnet, dass** zumindest zwei an gegenüberliegenden Seiten der Batterie (14) angeordnete Verriegelungselemente (33) vorgesehen sind, die insbesondere geführt einwärts aufeinander zu in eine Freigabestellung und auswärts voneinander weg in eine Verriegelungsstellung bewegbar sind, in der sie jeweils seitlich von der Batterie (14) vorstehen, wobei bevorzugt zumindest ein Federelement (39) vorgesehen ist, das die Verriegelungselemente (33) in Richtung der Verriegelungsstellung vorspannt.

3. Rangierantriebssystem (6) nach Anspruch 2, **dadurch gekennzeichnet, dass** die Verriegelungselemente (33) an zwei benachbart zueinander angeordneten Platten (34) ausgebildet sind, die einwärts aufeinander zu und auswärts voneinander weg bewegbar sind.

4. Rangierantriebssystem (6) nach Anspruch 2 oder 3, **dadurch gekennzeichnet, dass** an dem Gehäuse (16) Verriegelungsgegenelemente (40) ausgebildet sind, die derart ausgebildet und positioniert sind, dass die Verriegelungselemente (33) mit diesen in Eingriff kommen, wenn sie aus ihrer Freigabestellung in ihre Verriegelungsstellung überführt werden.

5. Rangierantriebssystem (6) nach Anspruch 4, **dadurch gekennzeichnet, dass** sich die Verriegelungselemente (33) in Richtung ihres freien Endes (35) verjüngen, insbesondere keilförmig zulaufen, und dass die Verriegelungsgegenelemente (40) Aussparungen definieren, insbesondere nutförmige Aussparungen.

6. Rangierantriebssystem (6) nach einem der vorhergehenden Ansprüche, **dadurch gekennzeichnet, dass** der Verriegelungs-/EntriegelungsMechanismus (32) insbesondere Griffmulden definierende Handgriffe (36) zur Betätigung des wenigstens einen Verriegelungselementes (33) aufweist, die insbesondere an der Unterseite (22) der Batterie (14) angeordnet sind.

7. Rangierantriebssystem (6) nach einem der vorhergehenden Ansprüche, **dadurch gekennzeichnet, dass** die Batterien (14) und die Gehäuse (16) mit korrespondierend ausgebildeten Führungselementen versehen sind, die derart ausgebildet sind, dass sie beim Einsetzen einer Batterie (14) in ein Gehäuse (16) eine eindeutige Einsetzrichtung vorgeben.

8. Rangierantriebssystem (6) nach Anspruch 7, **dadurch gekennzeichnet, dass** die Führungselemente einerseits als Vorsprung (41) und andererseits als Nut (42) ausgebildet sind.

9. Rangierantriebssystem (6) nach einem der vorhergehenden Ansprüche, **dadurch gekennzeichnet, dass** jede Batterie (14) eine Entladeschnittstelle (43) aufweist, die sich insbesondere an der Oberseite (21) der Batterie (14) befindet, wobei die Entladeschnittstelle (43) bevorzugt einen insbesondere an die Batterie (14) angeformten Stecker (44) aufweist, der in wenigstens eine korrespondierende, an dem Gehäuse (16) vorgesehene Buchse einsteckbar ist, und/oder jede Batterie (14) eine Ladeschnittstelle (46) aufweist, die insbesondere zwei Batterieladepole (45) umfasst.

10. Rangierantriebssystem (6) nach einem der vorhergehenden Ansprüche, **dadurch gekennzeichnet, dass** die Öffnung (25) jedes Gehäuses (16) mit einem Deckel (26) insbesondere vollständig verschließbar ist.

11. Rangierantriebssystem (6) nach Anspruch 10, **dadurch gekennzeichnet, dass** der Deckel (26) schwenkbar an der Unterseite des Gehäuses (16) gehalten und mittels eines Deckelverschlussmechanismus (27) in einer Schließposition verriegelbar ist.

12. Rangierantriebssystem (6) nach Anspruch 11, **dadurch gekennzeichnet, dass** der Deckelverschlussmechanismus (27) ein an dem Gehäuse (16) ausgebildetes Verschlusselement (28), insbesondere ein Hakenelement, ein dazu korrespondierendes, an dem Deckel (26) ausgebildetes Verschlussgegenelement (29), insbesondere einen Vorsprung, und einen mit dem Verschlusselement (28) wirkverbundenen Schiebeschalter (30) umfasst, wobei der Deckelverschlussmechanismus (27) durch Verschieben des Schiebeschalters (30) von einer Verschlussstellung, in der das Verschlusselement (28) mit dem Verschlussgegenelement (29) in Eingriff steht und der Deckel (26) in seiner Schließposition verriegelt ist, in eine Freigabestellung, in der das Verschlusselement (28) außer Eingriff mit dem Verschlussgegenelement (29) steht und der Deckel (26) in seine Öffnungsposition schwenkbar ist, überführbar ist.

13. Fahrzeug, insbesondere Fahrzeug ohne eigenen Antrieb, umfassend ein Rangierantriebssystem (6) nach einem der vorhergehenden Ansprüche, wobei es sich bei dem Fahrzeug bevorzugt um einen Anhänger (51), insbesondere einen Wohnwagen-, Boots- oder Pferdeanhänger handelt.

14. Kit umfassend ein Rangierantriebssystem (6) nach einem der Ansprüche 1 bis 12 und/oder ein Fahrzeug nach Anspruch 13 sowie eine Ladevorrichtung (47) zum Aufladen der Batterien (14) des Rangierantriebssystems (6), wobei die Ladevorrichtung (47) insbesondere ausgebildet ist, um mit einer Eingangsspannung von 220V oder 12V betrieben zu werden.

15. Kit nach Anspruch 14, **dadurch gekennzeichnet, dass** die Ladevorrichtung (47) wenigstens zwei Ladeschalen (48) für die wenigstens zwei Batterien (14) der wenigstens zwei Antriebseinheiten (7) umfasst und die Batterien (14) jeweils mit ihrer Ladeschnittstelle (46) nach unten in die Ladeschalen (48) einsetzbar sind, wobei die Ladeschalen (48) insbesondere mit Batteriestandanzeigen (49) versehen sind.

## Revendications

1. Système d'entraînement de manœuvre (6) pour un véhicule, en particulier un véhicule sans entraînement propre, de préférence pour une remorque (51), comprenant au moins deux unités d'entraînement (7) qui sont conçues pour être prévues sur le véhicule et pour entraîner chacune une roue (5) du véhicule, chaque unité d'entraînement (7) comprenant un élément d'entraînement (12) monté de manière rotative, qui est conçu et disposé de telle sorte qu'il peut être amené en appui contre une roue (5) du véhicule pour entraîner le véhicule, un moteur (13), qui est conçu pour mettre l'élément d'entraînement (12) en rotation, une batterie (14) conçue en particulier de manière à pouvoir être rechargée pour alimenter l'unité d'entraînement (7) en énergie électrique, un boîtier (16) en particulier résistant aux intempéries et/ou étanche à l'eau, qui entoure au moins le moteur (13) de l'unité d'entraînement (7) et dans lequel la batterie (14) de l'unité d'entraînement (7) peut être insérée et retirée, et un mécanisme de verrouillage/déverrouillage (32), au moyen duquel la batterie (14) peut être sélectivement fixée au boîtier (16) ou détachée de celui-ci, le mécanisme de verrouillage/déverrouillage (32) comprenant au moins un élément de verrouillage (33) disposé directement sur la batterie (14), qui peut être mis en engagement avec le boîtier (16), **caractérisé en ce que** le boîtier (16) de chaque unité d'entraînement (7) présente sur sa face inférieure une ouverture (25) à travers laquelle la batterie respective (14) peut être insérée par le bas dans le boîtier (16) avec sa face supérieure (21) en avant et peut être retirée de celui-ci avec sa face inférieure (22) en avant, et **en ce que** le au moins un élément de verrouillage (33) peut être actionné à la main, en particulier avec une seule main, sans l'aide d'un outil.

2. Système d'entraînement de manœuvre (6) selon la revendication 1, **caractérisé en ce qu'**au moins deux éléments de verrouillage (33) disposés sur des côtés opposés de la batterie (14) sont prévus, qui peuvent être déplacés en particulier en étant guidés vers l'intérieur l'un vers l'autre dans une position de libération et vers l'extérieur en s'éloignant l'un de l'autre dans une position de verrouillage, dans laquelle ils dépassent respectivement latéralement de la batterie (14), au moins un élément de ressort (39) étant de préférence prévu, qui précontraint les éléments de verrouillage (33) en direction de la position de verrouillage.

3. Système d'entraînement de manœuvre (6) selon la revendication 2, **caractérisé en ce que** les éléments de verrouillage (33) sont formés sur deux plaques (34) disposées à proximité l'une de l'autre, qui peuvent être déplacées vers l'intérieur en se rapprochant l'une de l'autre et vers l'extérieur en s'éloignant l'une de l'autre.

4. Système d'entraînement de manœuvre (6) selon la revendication 2 ou 3, **caractérisé en ce que** des contre-éléments de verrouillage (40) sont formés sur le boîtier (16), lesquels sont formés et positionnés de telle sorte que les éléments de verrouillage (33) viennent en engagement avec ceux-ci lorsqu'ils sont transférés de leur position de libération à leur position de verrouillage.

5. Système d'entraînement de manœuvre (6) selon la revendication 4, **caractérisé en ce que** les éléments de verrouillage (33) se rétrécissent en direction de leur extrémité libre (35), en particulier en se terminant en forme de coin, et **en ce que** les contre-éléments de verrouillage (40) définissent des évidements, en particulier des évidements en forme de rainure.

6. Système d'entraînement de manœuvre (6) selon l'une des revendications précédentes, **caractérisé en ce que** le mécanisme de verrouillage/déverrouillage (32) comporte des poignées (36) en particulier définissant des creux de préhension pour l'actionnement d'au moins un élément de verrouillage (33), qui sont en particulier disposées sur la face inférieure (22) de la batterie (14).

7. Système d'entraînement de manœuvre (6) selon l'une des revendications précédentes, **caractérisé en ce que** les batteries (14) et les boîtiers (16) sont pourvus d'éléments de guidage conçus de manière correspondante, qui sont conçus de telle sorte qu'ils définissent une direction d'insertion univoque lors de l'insertion d'une batterie (14) dans un boîtier (16).

8. Système d'entraînement de manœuvre (6) selon la revendication 7, **caractérisé en ce que** les éléments de guidage sont conçus d'une part comme une saillie (41) et d'autre part comme une rainure (42).

9. Système d'entraînement de manœuvre (6) selon l'une des revendications précédentes, **caractérisé en ce que** chaque batterie (14) présente une interface de décharge (43), qui se trouve en particulier sur la face supérieure (21) de la batterie (14), l'interface de décharge (43) présentant de préférence un connecteur (44), en particulier formé sur la batterie (14), qui peut être enfiché dans au moins une douille correspondante prévue sur le boîtier (16), et/ou chaque batterie (14) présente une interface de charge (46), qui comprend en particulier deux pôles de charge de batterie (45).

10. Système d'entraînement de manœuvre (6) selon l'une des revendications précédentes, **caractérisé en ce que** l'ouverture (25) de chaque boîtier (16) peut être fermée, en particulier complètement, par un couvercle (26).

11. Système d'entraînement de manœuvre (6) selon la revendication 10, **caractérisé en ce que** le couvercle (26) est maintenu pivotant sur la face inférieure du boîtier (16) et peut être verrouillé dans une position de fermeture au moyen d'un mécanisme de fermeture de couvercle (27).

12. Système d'entraînement de manœuvre (6) selon la revendication 11, **caractérisé en ce que** le mécanisme de fermeture de couvercle (27) comprend un élément de fermeture (28) formé sur le boîtier (16), en particulier un élément de crochet, un contre-élément de fermeture (29) correspondant formé sur le couvercle (26), en particulier une saillie, et un interrupteur à coulisse (30) en liaison active avec l'élément de fermeture (28), le mécanisme de fermeture de couvercle (27) pouvant être transféré, par déplacement de l'interrupteur coulissant (30), d'une position de fermeture, dans laquelle l'élément de fermeture (28) est en engagement avec le contre-élément de fermeture (29) et le couvercle (26) est verrouillé dans sa position de fermeture, à une position de libération, dans laquelle l'élément de fermeture (28) est hors engagement avec le contre-élément de fermeture (29) et le couvercle (26) peut pivoter dans sa position d'ouverture.

13. Véhicule, en particulier véhicule sans entraînement propre, comprenant un système d'entraînement de manœuvre (6) selon l'une des revendications précédentes, le véhicule étant de préférence une remorque (51), en particulier une remorque de caravane, de bateau ou de cheval.

14. Kit comprenant un système d'entraînement de manœuvre (6) selon l'une des revendications 1 à 12 et/ou un véhicule selon la revendication 13, ainsi qu'un dispositif de charge (47) pour charger les batteries (14) du système d'entraînement de manœuvre (6), le dispositif de charge (47) étant notamment configuré pour être alimenté par une tension d'entrée de 220V ou 12V.

15. Kit selon la revendication 14, **caractérisé en ce que** le dispositif de charge (47) comprend au moins deux plateaux de charge (48) pour les au moins deux batteries (14) des au moins deux unités d'entraînement (7) et les batteries (14) peuvent être insérées respectivement dans les plateaux de charge (48) avec leur interface de charge (46) vers le bas, les plateaux de charge (48) étant en particulier pourvus d'indicateurs de niveau de batterie (49).
